(19) Europäisches Patentamt

European Patent Office

Office européen des brevets

(11) **EP 0 625 529 B1**

(12) **EUROPÄISCHE PATENTSCHRIFT**

(45) Veröffentlichungstag und Bekanntmachung des Hinweises auf die Patenterteilung:
**29.08.2001   Patentblatt 2001/35**

(51) Int Cl.[7]: **C08G 18/62**, C09D 175/04, B05D 7/08

(21) Anmeldenummer: **94107048.4**

(22) Anmeldetag: **05.05.1994**

(54) **Bindemittelgemisch und seine Verwendung**

Binder mixture and its use

Mélange de liants et son utilisation

(84) Benannte Vertragsstaaten:
**AT BE CH DE ES FR GB GR IT LI NL**

(30) Priorität: **18.05.1993   DE 4316571**

(43) Veröffentlichungstag der Anmeldung:
**23.11.1994   Patentblatt 1994/47**

(73) Patentinhaber: **BAYER AG**
**51368 Leverkusen (DE)**

(72) Erfinder:
• **Margotte, Dieter, Dr.**
**D-47807 Krefeld (DE)**
• **Kremer, Wolfgang, DI.**
**D-47647 Kerken (DE)**
• **Hovestadt, Wieland, Dr.**
**D-47802 Krefeld (DE)**
• **Wamprecht, Christian, Dr.**
**D-41472 Neuss (DE)**

(56) Entgegenhaltungen:
EP-A- 0 029 598     EP-A- 0 068 383
EP-A- 0 155 559     EP-A- 0 219 131
EP-A- 0 313 018     EP-A- 0 421 027

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft ein neues, zur Herstellung von physikalisch schnell trocknenden Beschichtungen geeignetes Bindemittelgemisch aus einem Polyisocyanat und einer speziellen, hydroxyfunktionellen Polyacrylat-komponente, sowie die Verwendung des Bindemittelgemischs als Bindemittel in phsikalisch schnell trocknenden Beschichtungsmitteln für Holz- oder Holzwerkstoffe.

Zweikomponenten-Polyurethan-Beschichtungsmittel auf Basis von Lackpolyisocyanaten und hydroxyfunktionellen Polyacrylatharzen sind bereits bekannt.

In der EP-A-313018 werden Zweikomponenten-Polyurethan-Beschichtungsmittel auf Basis von Isocyanuratgruppen aufweisenden Polyisocyanaten und hydroxyfunktionellen Polyacrylaten mit einem Molekulargewicht (Mm) von 5000 bis 25000 beschrieben.

In der DE-OS 2 460 329 werden z.B. Polyacrylate beschrieben, die mit Polyisocyanaten vernetzt werden können. Diese niedermolekularen Produkte haben ein definiertes, mittleres Molekulargewicht (Zahlenmittel) von $M_n$ = 500 bis 2 000 und eine Uneinheitlichkeit von 0,5 bis 1,5. Ein Hauptnachteil für eine technische Nutzung besteht in dem für industrielle Anwendungen unzureichenden physikalischen Trocknungsverhalten. Eine rasche physikalische Trocknung, d.h. eine rasche Erzielung von Klebfreiheit der Lackfilme lange vor der vollständigen chemischen Vernetzung, ist eine Grundvoraussetzung für die Anwendbarkeit der Beschichtungsmittel für die großtechnische Serienlackierung, insbesondere von Holz- und Holzwerkstoffen.

Die in EP-A 0 068 383 beschriebenen Zweikomponenten-Polyurethanlacke auf Basis von hydroxyfunktionellen Polyacrylatharzen haben demgegenüber zwar ein deutlich verbessertes Trocknungsverhalten, jedoch werden die hohen diesbezüglichen Anforderungen, insbesondere für die industrielle Holz- und Möbellackierung auch mit den Systemen dieser Vorveröffentlichung nicht erreicht.

Wegen der geschilderten Problematik werden den in der Praxis eingesetzten lösungsmittelhaltigen Holz- und Möbellacken auf Basis von organischen Polyisocyanaten und den handelsüblichen Polyacrylatharzen stets physikalisch schnell trocknende Bindemittel wie Celluloseacetobutyrat (CAB) oder Nitrocellulose (NC) zugesetzt, um so die geforderten Trocknungsgeschwindigkeiten zu erreichen. Der Nachteil derartiger Beschichtungsmittel liegt neben der erforderlichen Mitverwendung einer weiteren Bindemittelkomponente in einer oftmals zu starken Vergilbung der Lackierung (NC) oder in einer oftmals zu beobachtenden schlechten Verträglichkeit mit der Polyisocynatkomponente, insbesondere mit aromatischen Polyisocyanaten (CAB).

Die der Erfindung zugrundeliegende Aufgabe bestand daher darin, ein neues Zweikomponenten-Bindemittelgemisch auf Basis von organischen Polyisocyanaten und hydroxyfunktionellen Polyacrylatharzen zur Verfügung zu stellen, welches mit den genannten Nachteilen des Standes der Technik nicht mehr behaftet ist, d.h. welches insbesondere die Herstellung von physikalisch schnell trocknenden Beschichtungen ohne Zusatz der genannten physikalisch schnell trocknenden Bindemittel geeignet ist.

Diese Aufgabe konnte mit der Bereitstellung der nachstehend näher beschriebenen erfindungsgemäßen Bindemittelgemische gelöst werden.

Gegenstand der Erfindung ist ein Bindemittelgemisch zur Herstellung von schnell physikalisch trocknenden Lacküberzügen aus

a) einer Polyisocyanat-Komponente mit einem NCO-Gehalt von 10 bis 30 Gew.-%, und

b) einer hydroxyfunktionellen Polyacrylat-Komponente

in, einem NCO/OH-Äquivalentenverhältnis von 0,5:1 bis 2:1 entsprechenden Mengen, dadurch gekennzeichnet, dass die Komponente b) aus mindestens einem hydroxyfunktionellen Polyacrylatharz eines bei mindestens 10 000 liegenden Molekulargewichts $M_n$ besteht, dessen 40 gew.-%ige Lösung in n-Butylacetat bei 23°C eine Viskosität gemessen nach DIN 53019 Teil 1 von mindestens 2 000 mPa.s aufweist, wobei die Polyisocyanatkomponente a) aus mindestens einem Biuret-, Urethan- oder Isocyanuratgruppen aufweisenden Polyisocyanat mit einer zwischen 2,5 und 6 liegenden mittleren NCO-Funktionalität besteht, und die Komponente b) aus mindestens einem hydroxyfunktionellen Polyacrylatharz besteht, welches durch Copolymerisation von

A) 2,5 bis 30 Gew.-% Hydroxyalkylestern der Acryl- und/oder Methacrylsäure,
B) 30 bis 90 Gew.-% Methylmethacrylat
C) 0 bis 50 Gew.-% Styrol,
D) 0 bis 2 Gew.-% (Meth)acrylsäure und
E) 0 bis 50 Gew.-% von A) und B) verschiedener $C_1$-$C_{18}$-Alkylester der Acryl- und/oder Methacrylsäure

hergestellt ist.

Gegenstand der Erfindung ist auch die Verwendung dieses Bindemittelgemischs als Bindemittel für lösungsmittelhaltige Zweikomponenten-Polyurethan-Beschichtungsmittel zur Beschichtung von Holz oder Holzwerkstoffen.

Bei der erfindungsgemäßen Bindemittelkomponente a) handelt es sich um Biuret-, Urethan- oder Isocyanuratgruppen aufweisende von Hexamethylendiisocyanat und/oder 1-Isocyanato-3,3,5-trimethyl-5-isocyanatomethylcyclohexan (IPDI) abgeleitete Polyisocyanate mit einer zwischen 2,5 und 6 liegenden mittleren NCO-Funktionalität. Sie werden durch an sich bekannte Modifizierung von einfachen organischen Diisocyanaten unter Biuret-, Urethanoder Isocyanuratbildung hergestellt, wobei jeweils nach der Modifizierungsreaktion evtl. noch vorliegende Überschüsse an nicht-modifiziertem monomerem Ausgangsisocyanat in an sich bekannter Weise, vorzugsweise durch Destillation, so weit entfernt werden, daß in den erfindungsgemäß einzusetzenden Lackpolyisocyanaten höchstens 0,7, vorzugsweise höchtens 0,5 Gew.-%, an überschüssigem Diisocyanat vorliegen. Die einzusetzenden Polyisocyanate weisen einen NCO-Gehalt, bezogen auf Feststoff, im Bereich von 10 bis 30 Gew.-%, vorzugsweise 15 bis 25 Gew.-% auf. Zu den besonders bevorzugten Lackpolyisocyanaten gehören Biuretgruppen aufweisende Polyisocyanate auf Basis von Hexamethylendiisocyanat, beispielsweise jene gemäß US-PS 3 124 605; sowie die bekannten Isocyanuratgruppen aufweisenden Polyisocyanate auf Basis Hexamethylendiisocynat, IPDI, Gemischen von Hexamethylendiisocyanat mit IPDI.

Die hydroxyfunktionellen Polyacrylatharze b) zeigen bei 50 Gew.-% Festkörper nach der unten beschriebenen Meßmethode nicht mehr meßbare Lösungsviskositäten. Alle weiteren Viskositätsangaben beziehen sich daher auf 40 gew.-%ige Lösungen in n-Butylacetat ebenfalls gemessen bei 23°C.

Die Lösungsviskositäten der erfindungsgemäß einzusetzenden Polyacrylate liegen als 40 %ige Lösungen in n-Butylacetat, bei 23°C im Rotationsviskosimeter gemessen, bei mindestens 2 000, vorzugsweise zwischen 2 000 und 30 000 mPa.s, insbesondere zwischen 2 000 und 25 000 mPa.s. Das in EP 0 068 383 (Beispiel 1) angegebene Poylacrylat hat unter identischen Verhältnissen (Lösemittel, Festkörper, Temperatur) eine Viskosität von 530 mPa.s.

Die Polyacrylatharze b) weisen im allgemeinen ein mittels der Gelpermeationschromatographie bestimmtes mittleres Molekulargewicht $M_n$ (Zahlenmittel) von mindestens 10 000, vorzugsweise 10 000 bis 120 000, insbesondere 10 000 bis 100 000 auf. Diese und alle nachstehenden Angaben bezüglich des Molekulargewichts der Komponente b) beziehen sich auf die von Z. Grabisic, P. Rempp und H. Benoit, in J.

Polymer Sc., Teil B, Polym. Lett. 5 (1967), S. 753 beschriebene Methode der Molekulargewichtsbestimmung.

Die Offenbarung in EP 0 068 383 bezüglich des Molekulargewichts der Polyhydroxypolyacrylate scheint falsch zu sein, weil eine Wiederholung von Beispiel 1 des Patents ein Polyacrylat ergibt, welches deutlich niedrigere, nach der genannten Methode bestimmte Molekulargewichte aufweist ($M_w$ = 24 000 bzw. $M_n$ = 6 100). In Analogie hierzu gibt die Wiederholung des Beispiels 2 von EP 0 068 383 ein Polyacrylat mit einem Molekulargewicht $M_w$ von 27 100 und $M_n$ von 5 200.

Die zur Herstellung der Copolymerisate b) eingesetzten Monomeren bestehen zu den 2,5 bis 30, vorzugsweise 2,5 bis 20 Gew.-% aus Monomeren A), zu 30 bis 90, vorzugsweise 55 bis 80 Gew.-% aus Monomer B), zu 0 bis 50, vorzugsweise 0 bis 30 Gew.-% aus Monomer C), zu 0 bis 2 Gew.-% aus Monomeren D) und zu 0 bis 50, vorzugsweise 0 bis 30 Gew.-% aus Monomeren E).

Bei den Monomeren der Gruppe A) handelt es sich um Hydroxyalkylester von Acrylsäure und/oder Methacrylsäure mit 2 bis 12, vorzugsweise 2 bis 6 Kohlenstoffatomen im Hydroxyalkylrest. Beispielhaft genannt seien 2-Hydroxyethylacrylat, die isomeren, insbesondere durch Anlagerung von Propylenoxid an Acrylsäure erhaltenen Hydroxypropylacrylate, die isomeren Hydroxybutylacrylate, Hydroxypentylacrylate und/oder Hydroxyhexylacrylate und/oder die diesen Acrylaten entsprechenden Methacrylate. Vorzugsweise handelt es sich bei den Monomeren A) um 2-Hydroxyethyl(meth)acrylate und/oder die isomeren Hydroxypropyl-(meth)acrylate. Aus der der beispielhaften Aufstellung geht hervor, daß die Hydroxylgruppen aufweisenden Hydroxylalkylester sowohl primäre als auch sekundäre Hydroxylgruppen aufweisen können. Die Monomeren A) werden im Rahmen der oben genannten Bereiche im übrigen in solchen Mengen eingesetzt, daß die resultierenden Acrylatharze, bezogen auf Festharz, einen Hydroxylgruppengehalt von 0,5 bis 5, vorzugsweise 1 bis 3 Gew.-% aufweisen.

Als Monomer B) wird Methylmethacrylat verwendet.

Als gegebenenfalls mitzuverwendendes Monomer C) wird Styrol eingesetzt.

Als gegebenenfalls mitzuverwendende Monomere D) werden freie Säuren, wie insbesondere Acryl- oder Methacrylsäure eingesetzt.

Bei den gegebenenfalls mitzuwendenden Monomeren E) handelt es sich um olefinisch ungesättigte Monomere, die von den Monomeren der Gruppen A) bis D) verschieden sind: die Acryl- und/oder Methacrylsäure-alkylester und/oder -cycloalkylester mit 1 bis 18, vorzugsweise 1 bis 8 Kohlenstoffatomen im Alkyl- bzw. Cycloalkylrest wie beispielsweise die Methyl-, Ethyl-, n-Propyl, n-Butyl, Isopropyl-, Isobutyl-, t-Butyl, die isomeren Pentyl-, Hexyl-, Octyl-, Dodecyl-, Hexadecyl-, Octadecyl-, 3,5,5,-Trimethylcyclohexyl-, Isobornyl- und/oder Cyclohexylester der genannten Säuren mit Ausnahme von Methylmethacrylat.

Die Copolymerisationsreaktion erfolgt vorzugsweise in organischer Lösung, wobei die üblichen, inerten Lösungsmittel in Betracht kommen. Beispielhaft genannt seien Toluol, Xylol, Chlorbenzol, n-Butylacetat, Ethylacetat, Ethylglykolacetat, die isomeren Pentylacetate, Hexylacetate, Methoxypropylacetat, Tetrahydrofuran, Dioxan, Aceton, Methylethylketon, höher substituierten Aromaten, wie z.B. Solvent-Naphta® , Schwerbenzol, verschiedene Solvesso® -Typen, verschiedene Shellsol® -Typen sowie höhersiedende, aliphatische und cycloaliphatische Kohlenwasserstoffe, wie z.B. verschiedene Testbenzine, Mineralterpentinöl, Isopar® -Typen, Nappar® -Typen, Tetralin und Dekalin sowie Gemische derartiger Lösungsmittel.

Bevorzugt eingesetzte Lösemittel sind n-Butylacetat, Methoxypropylacetat und Xylol, sowie Gemische dieser Lösungsmittel. Die Lösungsmittel werden bei der Durchführung der Copolymerisationsreaktion im allgemeinen in Mengen von 50 bis 70 Gew.-%, bezogen auf das Gesamtgewicht des Reaktionsansatzes eingesetzt.

Die erfindungswesentliche Viskosität der Polyacrylatharze b) wird nicht nur durch die oben genannte Auswahl geeigneter Monomerer, sondern insbesondere auch durch eine geeignete Kombination aus Polymerisationstemperatur, Initiatorart und Initiatormenge erreicht.

Im allgemeinen liegt die Polymerisationstemperatur innerhalb des Bereichs von 80 bis 150°C, vorzugsweise zwischen 90 und 120°C, besonders bevorzugt zwischen 100 und 115°C.

Geeignete Initiatoren sind solche, die in dem angegebenen Temperaturbereichen eine Halbwertszeit zwischen 5 Minuten und 2 Stunden haben. Dies sind z.B. Dilauroylperoxid, tert.-Butylperoxy-2-ethylhexanoat, tert.-Butylperoxydiethylacetat, Di-benzoylperoxid, tert.-Butylperoxyisobutyrat, 1,1-Di-tert-Butylperoxy-3.3.5-trimethylcyclohexan, 1,1-Di-tert-Butylperoxycyclohexan, tert.-Butylperoxy-3.3.5-trimethylhexanoat, tert-Butylperoxyisopropylcarbonat, 2.2-Di-tert-Butylperoxybutan, tert.-Butylperoxystearylcarbonat.

Die Initiatoren werden im allgemeinen in einer Menge von 0,5 bis 5, vorzugsweise 1 bis 3 Gew.-%, bezogen auf das Gewicht der Monomeren A) bis E) eingesetzt Diese Angabe bezieht sich auf lösungsmittelfreie Initiatoren einerseits und lösungsmittelfreie Monomere andererseits.

Besonders bevorzugt erfolgt die Herstellung der Polyacrylatharze b) unter Verwendung von n-Butylacetat als Lösungsmittel und von tert.-Butylperoxy-2-ethylhexanoat als Initiator bei Temperaturen von 100-115°C.

Die Herstellung der erfindungsgemäßen Bindemittelgemische erfolgt durch Abmischung der Komponenten a) und b), vorzugsweise unter Mitverwendung von Lösungsmitteln der oben beispielhaft genannten Art, so daß 30 bis 50 gew.-%ige Lösungen der genannten Bindemittelkomponenten resultieren. Im übrigen werden die Mengenverhältnisse so gewählt, daß ein NCO/OH-Aquivalentverhältnis von 0,5:1 bis 2:1, vorzugsweise 0,5:1 bis 1,5:1 resultiert.

Die so erhaltenen erfindungsgemäßen Bindemittelgemische bzw. ihrer Lösungen werden insbesondere zur Herstellung von Beschichtungsmitteln für Holz- oder Holzwerkstoffe, d.h. insbesondere zur Herstellung von Möbellakken verwendet. Diese Lacke können neben den erfindungsgemäßen Bindemittelgemischen und den genannten Lösungsmitteln weitere, an sich bekannte Hilfs- und Zusatzmittel enthalten.

Beispielhaft genannt seien in diesem Zusammenhang Verlaufmittel wie Oligoalkylacrylate, Pigmente und Füllstoffe, viskositätskontrollierende Zusätze wie Betonite und Kieselsäureester, Mattierungsmittel wie beispielsweise Kieselsäure, Aluminiumsilikate und hochmolekulare Wachse oder Katalysatoren für die Isocyanat-Additionsreaktion wie beispielsweise Zinn(II)octoat oder Dimethylbenzylamin.

Die unter Verwendung der erfindungsgemäßen Bindemittelgemische hergestellten Beschichtungsmittel können nach beliebigen Methoden der Lacktechnologie wie z.B. Spritzen, Streichen, Tauchen, Gießen oder Walzen auf die zu beschichtenden Substrate aufgetragen werden. Besonders bevorzugte Substrate sind Holz oder Holwerkstoffe.

Die mit den erfindungsgemäßen Beschichtungsmitteln hergestellten Überzüge sind bei 23°C im allgemeinen innerhalb eines Zeitraums von 30 bis 70 Minuten klebfrei (physikalische Trocknung).

Die folgenden Beispiele sollen den Erfindungsgegenstand näher erläutern. Prozentangaben beziehen sich auf das Gewicht.

**Beispiele**

Herstellung von Polyhydroxyacrylaten b)

In einem Glaskolben wird das Lösemittel (n-Butylacetat) vorgelegt und auf 110°C aufgeheizt. Danach gibt man die in Tabelle 1 aufgeführten Monomermischungen innerhalb von 2 Stunden zu. Die Initiatorlösung wird innerhalb von 3 Stunden parallel zu der Monomerzugabe zudosiert. Danach wird der Ansatz 2 Stunden bei 100°C nachgerührt. Die Viskositäten und Kenndaten sind in Tabelle 2 zusammengestellt.

Tabelle I

| Beispiele | 1 | 2 | 3 | 4 | 5 |
|---|---|---|---|---|---|
| Butylacetat (g) | 1.961 | 1.961 | 1.920 | 1.920 | 1.920 |

Tabelle I   (fortgesetzt)

| Beispiele | 1 | 2 | 3 | 4 | 5 |
|---|---|---|---|---|---|
| Monomerzusammensetzung | | | | | |
| Methylmethacrylat (g) | 1.195 | 1.002,6 | 1.009,5 | 1.214,8 | 1.012,6 |
| 2-Ethyl-hexylacrylat (g) | - | 203,4 | 205,7 | | |
| Styrol (g) | - | | | | 190 |
| Hydroxyethylmethacrylat(g) | 227,7 | 231,4 | 232,4 | 232,8 | 233,2 |
| Acrylsäure (g) | 29,0 | 14,3 | 14.4 | 14,4 | 18,2 |
| Initiatorlösung | | | | | |
| tert.-Butyl-peroxy-2-ethylhexanoat | 34,9 | 34,9 | 20,0 | 20.,0 | 28,0 |
| Butylacetat | 152,4 | 152,4 | 198,0 | 198.0 | 198,0 |
| | 3.600,0 | 3.600,0 | 3.600.0 | 3.600,0 | 3.600,0 |

In der Tabelle II sind die Kenndaten im Vergleich zu den Beispielen 1 und 2 aus EP-A-0 068 383 zusammengestellt (in Tabelle II Beispiele 6 und 7).

Tabelle II

| | | | | | | Vergleichsbeispiele | |
|---|---|---|---|---|---|---|---|
| Beispiele * | 1 | 2 | 3 | 4 | 5 | 6 | 7 |
| Festkörpergehalt %)*) | 40,5 | 40,0 | 39,7 | 41,0 | 40,2 | 40,0 | 40,0 |
| Viskosität (mPa. s)**) bei 23°C | 3.740 | 2.210 | 7.820 | 33.390 | 23,150 | 530 | 890 |

*) Der Festkörper (nicht flüchtiger Anteil) wurde nach DIN 53216 bestimmt.

**) Die Viskosität wurde in einem Contraves Rotationsviskosimeter bestimmt. Alle Produkte waren in Butylacetat gelöst. Die Messungen erfolgten nach DIN 53019 Teil I (Messungen von Viskositäten und Fließkurven mit Rotationsviskosimetern mit Standardgeometrie).

Ein Vergleich der Viskositäten zeigt den deutlichen Unterschied zwischen den erfindungsgemäßen Polyacrylatharzen einerseits und jenen gemäß EP-A 0 068 383.

Auch bezüglich der Molekulargewichte ergeben sich deutliche Unterschiede, wie aus dem nachstehenden Vergleich zwischen Beispielen 1 und 2 (erfindungsgemäß) einerseits und Beispielen 6 und 7 (Vergleichsbeispiele) andererseits hervorgeht (Tabelle III, Methode der Molekulargewichtsbestimmung entsprechend der oben gemachten Angabe). Es ist deutlich zu erkennen, daß die Molekulargewichte der erfindungsgemäßen Polyacrylatharze deutlich höher liegen als die der Polyacrylatharze gemäß EP-A-0 068 383.

Tabelle III

| | $M_w$ | $M_n$ | U |
|---|---|---|---|
| Polyacrylat aus Beispiel 1 | 65.100 | 26.800 | 1,4 |
| Polyacrylat aus Beispiel 2 | 58.600 | 22.500 | 1,6 |
| Polyacrylat aus Beispiel 6* | 24.000 | 6.100 | 2,9 |
| Polyacrylat aus Beispiel 7* | 27.100 | 5.200 | 4,2 |

* Vergleichsbeispiel

Verwendungsbeispiele

Nachstehend werden einige Lacke auf Basis der vorstehend genannten Polyacrylate hergestellt. Hierzu werden die Polyacrylatkomponenten so mit Butylacetat verdünnt, daß nach Zugabe der Härterlösung eine Spritzviskosität von 18 sec. (23°C) im DIN-Becher-4 resultiert. Als Härterlösung wurde eine 75 %ige Lösung in Methoxypropylacetat/Xylol (1:1) eines Biuretgruppen aufweisenden Polyisocyanats auf Basis von 1,6-Diisocyanatohexan mit einem NCO-Gehalt der Lösung von ca. 16,5 % verwendet. Das NCO/OH-Äquivalentverhältnis lag jeweils bei 1:1. Weitere Einzelheiten sind in der nachstehenden Tabelle IV zu entnehmen.

Tabelle IV

| Lack | A | B | C | D | E | F | G |
|---|---|---|---|---|---|---|---|
| | | | | | | Vergleichslacke | |
| Polyacrylat aus Beispiel 1 | 100 | - | - | - | - | - | - |
| Polyacrylat aus Beispiel 2 | - | 100 | - | - | - | - | - |
| Polyacrylat aus Beispiel 3 | - | - | 100 | - | - | - | - |
| Polyacrylat aus Beispiel 4 | - | - | - | 100 | - | - | - |
| Polyacrylat aus Beispiel 5 | - | - | - | - | 100 | - | - |
| Polyacrylat aus Beispiel 6 | - | - | - | - | - | 100 | 100 |
| CAB 381-0,5[*) | - | - | - | - | - | - | 15 |
| Butylacetat | 72 | 51 | 140,5 | 182 | 164 | 70 | 328 |
| Härterlösung | 12,1 | 12,6 | 13 | 13,6 | 12,5 | 14,9 | 22,6 |
| Handtrocknung[**) (in Min.) | 48 | 54 | 55 | 44 | 56 | >480 | 79 |

*) Handelsübliches Cellulose-acetobutyrat der Firma Eastman Kodak

**) Die Polyacrylate werden nach Zugabe des Härters mit einem Rakel (210 µm) auf eine Glasplatte aufgezogen. Von Zeit zu Zeit prüft man mittels eines festen Daumendrucks auf die lackierte Fläche, ob diese noch klebt, ob Abdrücke zurück bleiben oder ob keinerlei Abdruck auf dem Film erkennbar ist. Die hier angegebenen Zeiten beziehen sich auf die Zeit nach der kein Abdruck des Daumes mehr erkennbar ist.

Erläuterung der Tabelle IV

Der Vergleichslack F zeigt eine Handtrocknung von über 8 h, erst nach Zugabe von Celluloseacetobutyrat wird die von der Praxis geforderte schnelle Handtrocknung erreicht (Vergleichslack G). Demgegenüber zeigen die erfindungsgemäßen Lacke A bis E auch ohne Celluloseacetobutyrat die von der Praxis geforderten Trocknungswerte.

**Patentansprüche**

1.    Bindemittelgemisch zur Herstellung von schnell physikalisch trocknenden Lacküberzügen aus

   a) einer Polyisocyanat-Komponente mit einem NCO-Gehalt von 10 bis 30 Gew.-%, und

   b) einer hydroxyfunktionellen Polyacrylat-Komponente

in, einem NCO/OH-Äquivalentenverhältnis von 0,5:1 bis 2:1 entsprechenden Mengen, **dadurch gekennzeichnet**, dass die Komponente b) aus mindestens einem hydroxyfunktionellen Polyacrylatharz eines bei mindestens 10 000 liegenden Molekulargewichts $M_n$ besteht, dessen 40 gew.-%ige Lösung in n-Butylacetat bei 23°C eine Viskosität gemessen nach DIN 53019 Teil 1 von mindestens 2 000 mPa.s aufweist, wobei die Polyisocyanatkomponente a) aus mindestens einem Biuret-, Urethan- oder Isocyanuratgruppen aufweisenden von Hexamethylendiisocyanat und/oder IPDI abgeleiteten Polyisocyanat mit einer zwischen 2,5 und 6 liegenden mittleren NCO-Funktionalität besteht, und die Komponente b) aus mindestens einem hydroxyfunktionellen Polyacrylatharz besteht, welches durch Copolymerisation von

   A) 2,5 bis 30 Gew.-%          Hydroxyalkylestern der Acryl- und/oder Methacrylsäure,
   B) 30 bis 90 Gew.-%          Methylmethacrylat
   C) 0 bis 50 Gew.-%          Styrol,
   D) 0 bis 2 Gew.-%          (Meth)acrylsäure und

E) 0 bis 50 Gew.-%     von A) und B) verschiedener $C_1$-$C_{18}$-Alkylester der Acryl- und/oder Methacrylsäure

hergestellt ist.

2. Bindemittelgemisch gemäß Anspruch 1, **dadurch gekennzeichnet**, dass die Komponente b) aus mindestens einem hydroxyfunktionellen Polyacrylatharz mit einem OH-Gehalt, bezogen auf Festharz, von 0,5 bis 5 Gew.-% besteht

3. Bindemittelgemisch gemäß Anspruch 1, **dadurch gekennzeichnet**, dass die Komponente b) aus mindestens einem hydroxyfunktionellen Copolymerisat aus

A) 2,5 bis 20 Gew.-%     Hydroxyethyl(meth)acrylat und/oder den isomeren Hydroxypropyl(meth)acrylaten und/oder Hydroxybutyl(meth)acrylaten,
B) 55 bis 80 Gew.-%     Methylmethacrylat
C) 0 bis 30 Gew.-%     Styrol,
D) 0 bis 2 Gew.-%     (Meth)acrylsäure und
E) 0 bis 30 Gew.-%     $C_1$-$C_{18}$-Alkyl(meth)acrylaten mit Ausnahme von Methylmethacrylat

besteht.

4. Bindemittelgemisch gemäß Anspruch 1, **dadurch gekennzeichnet**, dass die Komponente b) aus mindestens einem Polyacrylatharz besteht, welches durch radikalische Lösungspolymerisation bei 90 bis 120°C unter Verwendung von Initiatoren mit einer Halbwertszeit von 5 bis 120 min hergestellt worden ist.

5. Verwendung der Bindemittelgemische gemäß Anspruch 1 als Bindemittel für lösungsmittelhaltige Zweikomponenten-Polyurethan-Beschichtungsmittel zur Beschichtung von Holz oder Holzwerkstoffen.

## Claims

1. Binder mixture for the production of rapidly physically drying lacquer coatings from

a) a polyisocyanate component with an NCO content of 10 to 30 wt.%, and

b) a hydroxy-functional polyacrylate component

in quantities corresponding to an NCO/OH equivalent ratio of 0.5:1 to 2:1, **characterised in that** component b) consists of at least one hydroxy-functional polyacrylate resin with a molecular weight $M_n$ of at least 10,000, a 40 wt.% solution of which in n-butyl acetate has a viscosity, measured to DIN 53019 part 1, of at least 2,000 mPa.s at 23°C, wherein the polyisocyanate component a) consists of at least one polyisocyanate comprising biuret, urethane or isocyanurate groups and derived from hexamethylene diisocyanate and/or IPDI and having an average NCO functionality of between 2.5 and 6, and component b) consists of at least one hydroxy-functional polyacrylate resin, which is produced by the copolymerisation of

A) 2.5 to 30 wt.%     hydroxyalkyl esters of acrylic and/or methacrylic acid,

B) 30 to 90 wt.%     methyl methacrylate

C) 0 to 50 wt.%     styrene,

D) 0 to 2 wt.%     (meth) acrylic acid and

E) 0 to 50 wt.%     $C_1$-$C_{18}$ alkyl esters of acrylic and/or methacrylic acid other than A) and B).

2. Binder mixture according to claim 1, **characterised in that** component b) consists of at least one hydroxy-functional polyacrylate resin with an OH content, relative to the solid resin, of 0.5 to 5 wt.%.

**3.** Binder mixture according to claim 1, **characterised in that** component b) consists of at least one hydroxy-functional copolymerisation product prepared from

A) 2.5-20 wt.%  hydroxyethyl (meth)acrylate and/or the isomeric hydroxypropyl (meth)acrylates and/or hydroxybutyl (meth)acrylates,
B) 55-80 wt.%  methyl methacrylate,
C) 0-30 wt.%  styrene,
D) 0-2 wt.%  (meth)acrylic acid and
E) 0-30 wt.%  $C_1$-$C_{18}$ alkyl (meth)acrylates with the exception of methyl methacrylate.

**4.** Binder mixture according to claim 1, **characterised in that** component b) consists of at least one polyacrylate resin produced by free-radical solution polymerisation at 90-120°C using initiators with a half-life of 5-120 minutes.

**5.** Use of binder mixtures according to claim 1 as binders for two-component polyurethane coating compositions containing solvent for coating wood or derived timber products.

**Revendications**

**1.** Mélange de liants pour la préparation de revêtements de laques, de vernis ou de peintures à séchage rapide par voie physique, constitués par

a) un composant de polyisocyanate possédant une teneur en groupes NCO de 10 à 30 % en poids, et

b) un composant de polyacrylate hydroxyfonctionnel

dans des quantités correspondant à un rapport d'équivalents NCO/OH de 0,5:1 à 2:1, **caractérisé en ce que** le composant b) est constitué d'au moins une résine de polyacrylate hydroxyfonctionnel dont le poids moléculaire $M_n$ se situe à au moins 10.000, dont la solution à 40 % en poids dans de l'acétate de n-butyle à 23°C présente une viscosité, mesurée conformément à la norme DIN 53019, partie 1, d'au moins 2.000 mPa.s, le composant de polyisocyanate a) étant constitué d'au moins un hexaméthylène-diisocyanate et/ou d'un polyisocyanate dérivé du IPDI présentant des groupes biuret, des groupes uréthanne ou des groupes isocyanurate, possédant une fonctionnalité NCO moyenne se situant entre 2,5 et 6, et le composant b) étant constitué d'au moins une résine de polyacrylate hydroxyfonctionnel que l'on prépare par copolymérisation de

A) à concurrence de 2,5 à 30 % en poids des esters hydroxyalkyliques d'acide acrylique et/ou d'acide méthacrylique,

B) à concurrence de 30 à 90 % en poids du méthacrylate de méthyle,

C) à concurrence de 0 à 50 % en poids du styrène

D) à concurrence de 0 à 2 % en poids de l'acide (méth)acrylique, et

E) à concurrence de 0 à 50 % en poids des esters alkyliques en $C_1$-$C_{18}$ d'acide acrylique et/ou d'acide méthacrylique différents de A) et B).

**2.** Mélange de liants selon la revendication 1, **caractérisé en ce que** le composant b) est constitué d'au moins une résine de polyacrylate hydroxyfonctionnel ayant une teneur en groupes OH, rapportée à la résine solide, de 0,5 à 5 % en poids.

**3.** Mélange de liants selon la revendication 1, **caractérisé en ce que** le composant b) est constitué d'au moins un copolymère hydroxyfonctionnel constitué par

A) à concurrence de 2,5 à 20 % en poids du (méth)acrylate d'hydroxyéthyle et/ou des (méth)acrylates d'hydroxypropyle isomères et/ou des (méth)acrylates d'hydroxybutyle isomères,

B) à concurrence de 55 à 80 % en poids du méthacrylate de méthyle,

C) à concurrence de 0 à 30 % en poids du styrène

D) à concurrence de 0 à 2 % en poids de l'acide (méth)acrylique, et

E) à concurrence de 0 à 30 % en poids des (méth)acrylates d'alkyle en $C_1$-$C_{18}$ à l'exception du méthacrylate de méthyle.

4. Mélange de liants selon la revendication 1, **caractérisé en ce que** le composant b) est constitué d'au moins une résine de polyacrylate que l'on a préparée par polymérisation radicalaire en solution à une température de 90 à 120°C en utilisant des initiateurs possédant un temps de demi-vie de 5 à 120 minutes.

5. Utilisation des mélanges de liants selon la revendication 1 à titre de liants pour des agents d'enduction de polyuréthanne à deux composants contenant un ou plusieurs solvants pour l'enduction du bois ou de matériaux à base de bois.